# EUROPEAN PATENT APPLICATION

(11) **EP 4 116 096 A1**
(43) Date of publication of application: **11.01.2023**
(21) Application number: 21763963.2
(22) Date of filing: 02.03.2021
(51) Int. Cl.: B32B 27/32, B32B 27/00, B32B 27/10, B65D 65/40

(54) **MATERIAL OF PAPER CONTAINER FOR LIQUID, AND PAPER CONTAINER FOR LIQUID**

(30) Priority: 06.03.2020 JP 2020039414
(71) Applicant: Nippon Paper Industries Co., Ltd., Tokyo 114-0002 (JP)
(72) Inventor: OKUBO, Katsuyuki, Tokyo 114-0002 (JP); MIYAGAWA, Shigekazu, Tokyo 114-0002 (JP)
(74) Representative: Murgitroyd & Company
(86) International application number: PCT/JP2021/008017
(87) International publication number: WO 2021/177323

(57) **Abstract**

Provided are a liquid-packaging carton material and a liquid-packaging carton each suitable for sealing of a joint portion by an ultrasonic vibration sealing system. The liquid-packaging carton material includes: a paper base material layer (layer A); a thermoplastic resin layer containing a polyethylene resin as a main component (layer B) serving as an outermost layer, which is laminated on a front surface of the paper base material layer (layer A); and at least: a thermoplastic resin layer containing a polyethylene resin as a main component (layer C); a barrier layer (layer D); an adhesive resin layer (layer E); and a thermoplastic resin layer containing a polyethylene resin as a main component (layer F) serving as an innermost layer, which are laminated on a back surface of the paper base material layer (layer A) in the stated order from a back surface side, wherein a thermoplastic resin for forming the thermoplastic resin layer (layer F) has a melt mass-flow rate higher than a melt mass-flow rate of an adhesive resin for forming the adhesive resin layer (layer E).

## Description

### Technical Field

The present invention relates to a liquid-packaging carton material and a liquid-packaging carton for packaging a liquid beverage by an aseptic filling packaging system.

### Background Art

As a liquid-packaging carton material to be used for, for example, a gable top-type liquid-packaging carton or a brick-type liquid-packaging carton for packaging milk, a fruit juice beverage, green tea, an alcoholic beverage, and other various liquid beverages by an aseptic filling packaging system, there is known a liquid-packaging carton material obtained by laminating a thermoplastic resin layer containing a polyethylene resin as a main component serving as an outermost layer on a front surface of a paper base material layer, and laminating at least a thermoplastic resin layer containing a polyethylene resin as a main component, a barrier layer, an adhesive resin layer, and a thermoplastic resin layer containing a polyethylene resin as a main component serving as an innermost layer on a back surface of the paper base material layer in the stated order from a back surface side (see, for example, Patent Literatures 1 and 2).

In sealing of a joint portion performed in forming of a liquid-packaging carton using the liquid-packaging carton material, the thermoplastic resin layer containing a polyethylene resin as a main component serving as an innermost layer serves as a sealant layer for the sealing. As a system of sealing through melting of the thermoplastic resin layer which is the innermost layer serving as the sealant layer, there are known a high-frequency induction sealing system, a hot air sealing system, and an ultrasonic vibration sealing system. The high-frequency induction sealing system, which uses a metal as a medium, cannot be used when the barrier layer is not aluminum because heating cannot be performed. In addition, the hot air sealing system cannot be used in some usage environments. Accordingly, the ultrasonic vibration sealing system, which can be used even when the barrier layer is not aluminum, and which has no restriction on usage environments, is widely adopted.

### Citation List

### Patent Literature

[PTL 1] JP 2001-322624 A
[PTL 2] JP 2007-269037 A

### Summary of Invention

### Technical Problem

However, in the sealing by the ultrasonic vibration sealing system, vibration is applied from outside to melt the innermost layer with frictional heat. Accordingly, when the melting is not sufficient owing to, for example, restriction on melting time, in the case where the joint portion has a step, the step cannot be filled, and hence a pin hole is liable to be generated by an air gap, and sealing performance may be impaired. In order to prevent such situation, when an energy and a pressure of the ultrasonic vibration are increased, the adhesive resin layer bonded to the barrier layer may be melted to flow owing to excessive heat generation, with the result that the bonding may be hindered.

Accordingly, in the sealing by the ultrasonic vibration sealing system, there has been a problem in that it is difficult to secure stable sealing conditions so that sealing can be performed without a pin hole.

The inventors of the present invention have made extensive test studies in order to solve the above-mentioned problem, and as a result, with attention focused on meltability of the thermoplastic resin layer containing a polyethylene resin as a main component serving as an innermost layer, have completed the present invention.

An object of the present invention is to provide a liquid-packaging carton material and a liquid-packaging carton each suitable for sealing of a joint portion particularly by an ultrasonic vibration sealing system.

### Solution to Problem

In order to achieve the above-mentioned object, according to the invention as described in claim 1, there is provided a liquid-packaging carton material, including: a paper base material layer (layer A); a thermoplastic resin layer containing a polyethylene resin as a main component (layer B) serving as an outermost layer, which is laminated on a front surface of the paper base material layer (layer A); and at least: a thermoplastic resin layer containing a polyethylene resin as a main component (layer C); a barrier layer (layer D); an adhesive resin layer (layer E); and a thermoplastic resin layer containing a polyethylene resin as a main component (layer F) serving as an innermost layer, which are laminated on a back surface of the paper base material layer (layer A) in the stated order from a back surface side, wherein a thermoplastic resin for forming the thermoplastic resin layer (layer F) has a melt mass-flow rate higher than a melt mass-flow rate of an adhesive resin for forming the adhesive resin layer (layer E).

According to the invention as described in claim 2, in the invention as described in claim 1, the adhesive resin for forming the adhesive resin layer (layer E) has a melt mass-flow rate of from 6 g/10 min to 9 g/10 min, and the thermoplastic resin for forming the thermoplastic resin layer (layer F) has a melt mass-flow rate of 12 g/10 min or more.

According to the invention as described in claim 3, in the invention as described in claim 1 or 2, the adhesive resin of the adhesive resin layer (layer E) contains an ethylene-methacrylic acid copolymer resin as a main component.

According to the invention as described in claim 4, in the invention as described in claim 1 or 2, the adhesive resin of the adhesive resin layer (layer E) contains a polyethylene resin as a main component.

According to the invention as described in claim 5, there is provided a liquid-packaging carton, which is obtained by using the liquid-packaging carton material of any one of claims 1 to 4.

### Advantageous Effects of Invention

According to the invention as described in claim 1, the liquid-packaging carton material, including: the paper base material layer (layer A); the thermoplastic resin layer containing a polyethylene resin as a main component (layer B) serving as an outermost layer, which is laminated on the front surface of the paper base material layer (layer A); and at least: the thermoplastic resin layer containing a polyethylene resin as a main component (layer C); the barrier layer (layer D); the adhesive resin layer (layer E); and the thermoplastic resin layer containing a polyethylene resin as a main component (layer F) serving as an innermost layer, which are laminated on the back surface of the paper base material layer (layer A) in the stated order from the back surface side, can be provided. The thermoplastic resin for forming the thermoplastic resin layer (layer F) has a melt mass-flow rate higher than the melt mass-flow rate of the adhesive resin for forming the adhesive resin layer (layer E), and hence the thermoplastic resin layer (layer F) can be more easily melted than the adhesive resin layer (layer E) .

With this configuration, even when sealing of a joint portion of the liquid-packaging carton performed in a process for forming of the liquid-packaging carton is performed by an ultrasonic vibration sealing system, the thermoplastic resin layer (layer F) can be melted so as to become sufficiently flowable before the adhesive resin layer (layer E) is melted. With this configuration, even when the joint portion has a step, the step can be securely filled, and hence stable sealing in which the joint portion is sealed without a pin hole can be secured.

According to the invention as described in claim 2, in the invention as described in claim 1, the adhesive resin for forming the adhesive resin layer (layer E) has a melt mass-flow rate of from 6 g/10 min to 9 g/10 min, and the thermoplastic resin for forming the thermoplastic resin layer (layer F) has a melt mass-flow rate of 12 g/10 min or more. Accordingly, in the sealing of the joint portion, the thermoplastic resin layer (layer F) is sufficiently melted to flow before the adhesive resin layer (layer E) is melted to flow, and hence stable sealing in which the joint portion is sealed without a pin hole can be secured without hindering bonding between the adhesive resin layer (layer E) and the barrier layer (layer D).

According to the invention as described in claim 3, in the invention as described in claim 1 or 2, the adhesive resin of the adhesive resin layer (layer E) contains the ethylene-methacrylic acid copolymer resin as a main component, and hence is suitable when the barrier layer (layer D) is metal foil such as aluminum foil because the ethylene-methacrylic acid copolymer resin is excellent in adhesiveness with a metal.

According to the invention as described in claim 4, in the invention as described in claim 1 or 2, the adhesive resin of the adhesive resin layer (layer E) contains the polyethylene resin as a main component, and hence is suitable when the barrier layer (layer D) is not the metal foil and a ceramic deposited film or a resin, such as an ethylene vinyl alcohol copolymer (EVOH), polyvinylidene chloride (PVDC), or nylon, is used as the layer.

According to the invention as described in claim 5, the liquid-packaging carton is formed by using the liquid-packaging carton material of any one of claims 1 to 4. Accordingly, even when the sealing of the joint portion is performed by the ultrasonic vibration sealing system, the liquid-packaging carton in which the joint portion is securely sealed without a pin hole can be obtained.

### Brief Description of Drawings

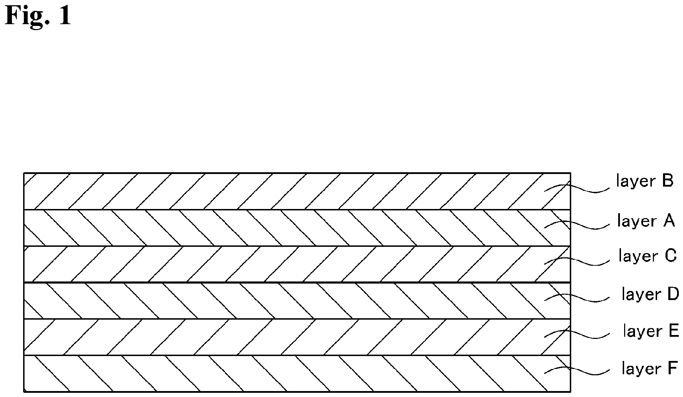

FIG. 1 is an explanatory view for illustrating an example of a laminate structure of a liquid-packaging carton material according to the present invention.

### Description of Embodiments

Now, examples of embodiments of a liquid-packaging carton material and a liquid-packaging carton using the liquid-packaging carton material according to the present invention are described in detail with reference to the drawing.

First, an example of an embodiment of the liquid-packaging carton material according to the present invention is described.

FIG. 1 is an explanatory view for illustrating an example of a laminate structure of the liquid-packaging carton material according to the present invention.

The liquid-packaging carton material in this example has a layer structure in which a thermoplastic resin layer containing a polyethylene resin as a main component (layer B) serving as an outermost layer is laminated on a front surface of a paper base material layer (layer A), and at least a thermoplastic resin layer containing a polyethylene resin as a main component (layer C), a barrier layer (layer D), an adhesive resin layer (layer E), and a thermoplastic resin layer containing a polyethylene resin as a main component (layer F) serving as an innermost layer are laminated on a back surface of the paper base material layer (layer A) in the stated order from the back surface side.

The polyethylene resin used for each of the thermoplastic resin layer containing a polyethylene resin as a main component (layer B) to be laminated on the front surface of the paper base material layer (layer A) and the thermoplastic resin layer containing a polyethylene resin as a main component (layer C) to be laminated on the back surface of the paper base material layer (layer A) is not particularly limited, and polyethylene(s) selected from, for example, low-density polyethylene, linear low-density polyethylene, medium-density polyethylene, and high-density polyethylene are used.

In addition, the thermoplastic resin layer containing a polyethylene resin as a main component (layer B) and the thermoplastic resin layer containing a polyethylene resin as a main component (layer C) may each be formed only of a polyethylene resin, and any other thermoplastic resin that may be subjected to heat sealing may be mixed therewith. Examples of the thermoplastic resin to be mixed may include polypropylene and a modified polyester.

As the thermoplastic resin for forming the thermoplastic resin layer (layer F), a thermoplastic resin having a melt mass-flow rate higher than a melt mass-flow rate of an adhesive resin for forming the adhesive resin layer (layer E) is used.

The melt mass-flow rate of the adhesive resin for forming the adhesive resin layer (layer E) is preferably from 6 g/10 min to 9 g/10 min, and the melt mass-flow rate of the thermoplastic resin for forming the thermoplastic resin layer (layer F) is preferably 12 g/10 min or more.

In this example, an adhesive resin having a melt mass-flow rate of 8 g/10 min is used as the adhesive resin for forming the adhesive resin layer (layer E), and a thermoplastic resin having a melt mass-flow rate of 15 g/10 min is used as the thermoplastic resin for forming the thermoplastic resin layer (layer F).

The melt mass-flow rate is measured in conformity with JIS K 7210, and the measurement temperature is 190°C.

The adhesive resin for forming the adhesive resin layer (layer E) bonds the barrier layer (layer D) and the thermoplastic resin layer (layer F) to each other, and a thermoplastic resin which is melted by heat to exhibit adhesiveness is used. Examples of the adhesive resin include low-density polyethylene, an ethylene-acrylic acid copolymer resin (EAA), an ethylene-methacrylic acid copolymer resin (EMAA), an ionomer, an ethylene-methyl acrylate copolymer resin (EMA), an ethylene-methyl methacrylate copolymer resin (EMMA), and a type of polyethylene subjected to graft polymerization with maleic anhydride (specifically, ADMER manufactured by Mitsui Chemicals, Inc.). Of those adhesive resins, an ethylene-methacrylic acid copolymer resin or a thermoplastic resin containing an ethylene-methacrylic acid copolymer resin as a main component is suitable for the adhesive resin to be used for the adhesive resin layer (layer E) particularly when the barrier layer (layer D) is metal foil such as aluminum foil because the resin is excellent in adhesiveness with a metal. In addition, the thermoplastic resin containing a polyethylene resin as a main component is suitable for the adhesive resin to be used for the adhesive resin layer (layer E) when the barrier layer (layer D) is not the metal foil and a ceramic deposited film or a resin, such as an ethylene vinyl alcohol copolymer (EVOH), polyvinylidene chloride (PVDC), or nylon, is used as the layer.

The barrier layer (layer D) only needs to have an oxygen barrier property to prevent permeation of oxygen, and is not particularly limited, and there is used, for example, aluminum foil, a ceramic deposited film, or an ethylene vinyl alcohol copolymer (EVOH). In this example, aluminum foil is used as the barrier layer (layer D).

According to the liquid-packaging carton material formed as described above, the thermoplastic resin having a melt mass-flow rate higher than the melt mass-flow rate of the adhesive resin for forming the adhesive resin layer (layer E) is used as the thermoplastic resin for forming the thermoplastic resin layer (layer F), and hence the thermoplastic resin layer (layer F) is more easily melted than the adhesive resin layer (layer E).

With this configuration, even when a joint portion of a liquid-packaging carton is sealed by an ultrasonic vibration sealing system in a process for forming of the liquid-packaging carton, the thermoplastic resin layer (layer F) can be melted so as to become sufficiently flowable before the adhesive resin layer (layer E) is melted. With this configuration, even when the joint portion of the liquid-packaging carton has a step, the step can be securely filled, and hence stable sealing in which the joint portion is sealed without a pin hole can be secured.

In addition, the melt mass-flow rate of the adhesive resin for forming the adhesive resin layer (layer E) is preferably from 6 g/10 min to 9 g/10 min, and the melt mass-flow rate of the thermoplastic resin for forming the thermoplastic resin layer (layer F) is preferably 12 g/10 min or more. With such configuration, in the sealing of the joint portion of the liquid-packaging carton, the thermoplastic resin layer (layer F) is sufficiently melted to flow before the adhesive resin layer (layer E) is melted to flow, and hence stable sealing in which the joint portion is sealed without a pin hole can be secured without hindering bonding between the adhesive resin layer (layer E) and the barrier layer (layer D).

In this example, aluminum foil is used as the barrier layer (layer D). However, when the barrier layer (layer D) is not a metal and a ceramic deposited film or a resin, such as an ethylene vinyl alcohol copolymer (EVOH), polyvinylidene chloride (PVDC), or nylon, is used as the layer, in the sealing of a joint portion of the liquid-packaging carton performed in a process for forming of a liquid-packaging carton, the sealing may be performed not only by the ultrasonic vibration sealing system but also by a high-frequency induction sealing system or a hot air sealing system.

Next, an example of an embodiment of a liquid-packaging carton using the liquid-packaging carton material is described.

The liquid-packaging carton according to the present invention is formed by using the liquid-packaging carton material, and is formed in accordance with a forming step of an aseptic filling packaging system of the related-art. A shape of the liquid-packaging carton to be formed is not particularly limited, and there are given, for example, gable top-type and brick-type liquid-packaging cartons.

According to the liquid-packaging carton formed by using the liquid-packaging carton material, the liquid-packaging carton in which the joint portion is securely sealed without a pin hole can be obtained even when the sealing of the joint portion of the liquid-packaging carton is performed by the ultrasonic vibration sealing system.

## Claims

1. A liquid-packaging carton material, comprising:
a paper base material layer (layer A);
a thermoplastic resin layer containing a polyethylene resin as a main component (layer B) serving as an outermost layer,
which is laminated on a front surface of the paper base material layer (layer A); and
at least:
a thermoplastic resin layer containing a polyethylene resin as a main component (layer C);
a barrier layer (layer D);
an adhesive resin layer (layer E); and
a thermoplastic resin layer containing a polyethylene resin as a main component (layer F) serving as an innermost layer,
which are laminated on a back surface of the paper base material layer (layer A) in the stated order from a back surface side,
wherein a thermoplastic resin for forming the thermoplastic resin layer (layer F) has a melt mass-flow rate higher than a melt mass-flow rate of an adhesive resin for forming the adhesive resin layer (layer E).

2. The liquid-packaging carton material according to claim 1,
wherein the adhesive resin for forming the adhesive resin layer (layer E) has a melt mass-flow rate of from 6 g/10 min to 9 g/10 min, and
wherein the thermoplastic resin for forming the thermoplastic resin layer (layer F) has a melt mass-flow rate of 12 g/10 min or more.

3. The liquid-packaging carton material according to claim 1 or 2, wherein the adhesive resin of the adhesive resin layer (layer E) contains an ethylene-methacrylic acid copolymer resin as a main component.

4. The liquid-packaging carton material according to claim 1 or 2, wherein the adhesive resin of the adhesive resin layer (layer E) contains a polyethylene resin as a main component.

5. A liquid-packaging carton, which is obtained by using the liquid-packaging carton material of any one of claims 1 to 4.
